# EUROPEAN PATENT APPLICATION

(11) **EP 4 790 885 A1**
(43) Date of publication of application: **12.08.2026**
(21) Application number: 24874387.4
(22) Date of filing: 26.08.2024
(51) Int. Cl.: H02M 7/48, H02M 1/08

(54) **AUXILIARY CIRCUIT, POWER CONVERSION DEVICE, AND MOTOR UNIT**

(30) Priority: 04.10.2023 JP 2023172558
(71) Applicant: Panasonic Intellectual Property Management Co., Ltd., Kadoma-shi, Osaka 571-0057 (JP)
(72) Inventor: IDO, Shigeru, Osaka 571-0057 (JP)
(74) Representative: SSM Sandmair
(86) International application number: PCT/JP2024/030254
(87) International publication number: WO 2025/074773

(57) **Abstract**

An auxiliary circuit is used in a power conversion device including a converter, a drive power supply unit, and a resonator to convert input voltage applied between a positive electrode line and a negative electrode line into output voltage. The auxiliary circuit includes an auxiliary switching unit, an auxiliary drive unit, and an auxiliary power supply unit. The converter includes a leg including a high-side switching element and a low-side switching element connected in series between the positive electrode line and the negative electrode line to convert the input voltage into the output voltage by switching on and off of the high-side switching element and the low-side switching element. The drive power supply unit generates a drive voltage to be used for controlling on and off of the high-side switching element and the low-side switching element based on the input voltage. The resonator includes a resonant inductor and a resonant capacitor connected to a main connection point that is a connection point between the high-side switching element and the low-side switching element. The auxiliary switching unit includes an auxiliary switching element disposed between the main connection point and the resonant inductor to allow a current to flow between the main connection point and the resonant inductor when the auxiliary switching element is turned on. The auxiliary drive unit includes an auxiliary driver that controls on and off of the auxiliary switching element. The auxiliary power supply unit includes an auxiliary power supply capacitor for generating an operating voltage of the auxiliary driver to allow a current to flow from the drive power supply unit toward the main connection point through the auxiliary power supply capacitor when the low-side switching element is turned on while the auxiliary switching element is turned off and the high-side switching element is turned off.

## Description

### TECHNICAL FIELD

Techniques disclosed herein relate to an auxiliary circuit used in a power conversion device, a power conversion device, and a motor unit.

### BACKGROUND ART

PTL 1 discloses an inverter device of a resonant type. The inverter device of a resonant type includes an inverter circuit, a resonant circuit connected to an output terminal of the inverter circuit, and a control circuit that controls the inverter circuit and the resonant circuit.

The inverter circuit includes a phase-specific main circuit and a capacitor. The phase-specific main circuit includes a main switching element connected to a positive terminal of a power supply, the main switching element being connected to a main switching element connected to a negative terminal of the power supply. These two main switching elements are each connected in parallel to a diode. The capacitor is connected in parallel to the main switching elements in the phase-specific main circuit. The resonant circuit includes a plurality of auxiliary switching elements and an inductor for resonance.

This inverter device of a resonant type performs charging and discharging of the capacitor appropriately using a resonant current between the inductor and the capacitor by switching on and off of the plurality of auxiliary switching elements. Consequently, zero-volt switching can be implemented. Additionally, losses generated when the main switching elements are turned on or off can be reduced.

PTL 1 does not disclose or suggest how to generate operating voltage of an auxiliary driver (not disclosed in PTL 1) that controls on and off of an auxiliary switching element for switching connection between the inductor for resonance and the capacitor.

For example, besides a drive power supply unit configured to generate operating voltage of a drive driver (a driver that controls on and off of the main switching elements) based on input voltage input to a power conversion device, providing an additional power supply (e.g., a floating power supply having an isolation transformer) is conceivable to generate the operating voltage of the auxiliary driver, the additional power supply being configured to independently generate the operating voltage of the auxiliary driver based on the input voltage input to the power conversion device. Unfortunately, when such an additional power supply is independently provided, a circuit is less likely to be reduced in size and cost.

### Citation List

### Patent Literature

PTL 1: Unexamined Japanese Patent Publication No. 2003-18876

### SUMMARY OF THE INVENTION

It is an object of techniques disclosed herein to provide an auxiliary circuit capable of generating operating voltage of an auxiliary driver without independently providing an additional power supply such as a floating power supply.

The techniques disclosed herein relate to an auxiliary circuit used in a power conversion device that includes a converter, a drive power supply unit, and a resonator to convert input voltage applied between a positive electrode line and a negative electrode line into output voltage. The auxiliary circuit includes an auxiliary switching unit, an auxiliary drive unit, and an auxiliary power supply unit. The converter includes a leg including a high-side switching element and a low-side switching element connected in series between the positive electrode line and the negative electrode line to convert the input voltage into the output voltage by switching on and off of the high-side switching element and the low-side switching element. The drive power supply unit generates drive voltage used for controlling on and off of the high-side switching element and the low-side switching element based on the input voltage. The resonator includes a resonant inductor and a resonant capacitor connected to a main connection point that is a connection point between the high-side switching element and the low-side switching element. The auxiliary switching unit includes an auxiliary switching element disposed between the main connection point and the resonant inductor to allow a current to flow between the main connection point and the resonant inductor when the auxiliary switching element is turned on. The auxiliary drive unit includes an auxiliary driver that controls on and off of the auxiliary switching element. The auxiliary power supply unit includes an auxiliary power supply capacitor for generating an operating voltage of the auxiliary driver to allow a current to flow from the drive power supply unit toward the main connection point through the auxiliary power supply capacitor when the low-side switching element is turned on while the auxiliary switching element is turned off and the high-side switching element is turned off.

The techniques disclosed herein enable charging the auxiliary power supply capacitor using the drive voltage generated by the drive power supply unit. Thus, the operating voltage of the auxiliary driver can be generated in the auxiliary power supply capacitor. As described above, the techniques disclosed herein enable generating the operating voltage of the auxiliary driver without independently providing an additional power supply such as a floating power supply (a power supply having an isolation transformer).

### BRIEF DESCRIPTION OF THE DRAWINGS

Fig. 1 is a block diagram illustrating a configuration of a motor unit according to a first exemplary embodiment.
Fig. 2 is a circuit diagram illustrating a configuration of an auxiliary circuit of the first exemplary embodiment.
Fig. 3 is a waveform chart for illustrating a first operation (operation of turning on a high-side switching element after turning off a low-side switching element) of a power conversion device.
Fig. 4 is a waveform chart for illustrating a second operation (operation of turning on the low-side switching element after turning off the high-side switching element) of the power conversion device.
Fig. 5 is a circuit diagram illustrating a configuration of a power conversion device according to a first modification of the first exemplary embodiment.
Fig. 6 is a circuit diagram illustrating a configuration of a power conversion device according to a second modification of the first exemplary embodiment.
Fig. 7 is a circuit diagram illustrating a configuration of a power conversion device according to a third modification of the first exemplary embodiment.
Fig. 8 is a circuit diagram illustrating a configuration of a power conversion device according to a fourth modification of the first exemplary embodiment.
Fig. 9 is a circuit diagram illustrating a configuration of a power conversion device according to a second exemplary embodiment.
Fig. 10 is a circuit diagram illustrating a configuration of a power conversion device according to a third exemplary embodiment.

### DESCRIPTION OF EMBODIMENT

Hereinafter, exemplary embodiments will be described in detail with reference to the drawings. Each of the exemplary embodiments described below shows a specific example of the present disclosure. Thus, numerical values, components, placement positions and connection modes of the components, steps, order of the steps, and the like shown in the following exemplary embodiments are merely examples, and are not intended to limit the present disclosure. Consequently, the components in the following exemplary embodiments include a component being not described in the independent claim indicating the most generic concept of the present disclosure, the component being described as an optional component. Each drawing is a schematic diagram, and is not necessarily strictly illustrated. Each drawing shows the same or corresponding part denoted by the same reference numeral to quote description of the part.

### (First exemplary embodiment)

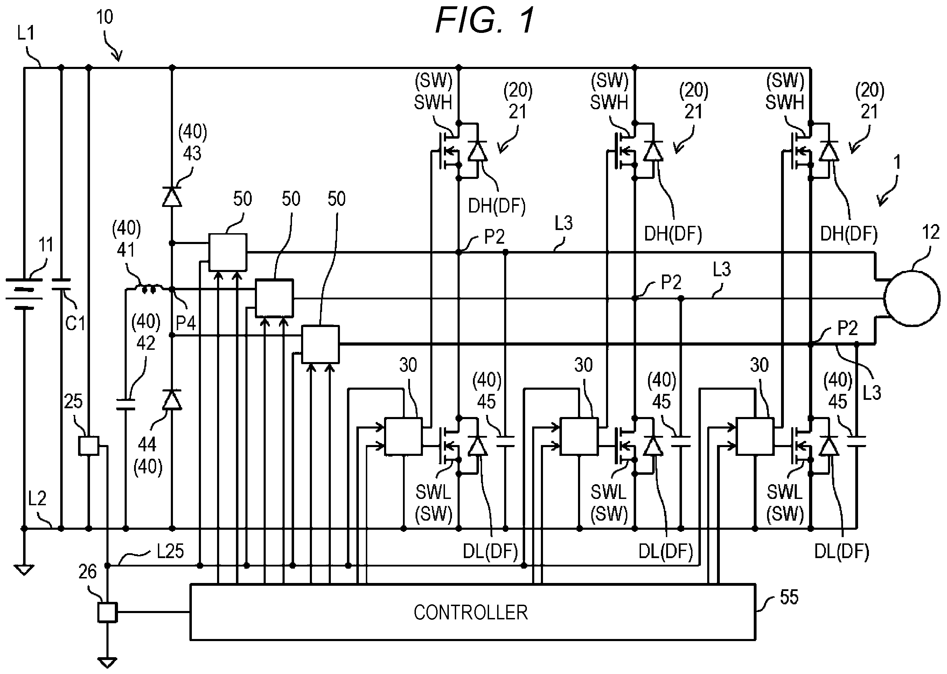

Fig. 1 is a block diagram illustrating a configuration of motor unit 1 according to a first exemplary embodiment. Motor unit 1 is connected to power supply 11 and includes motor 12 and power conversion device 10. Power supply 11 is a DC power supply. Power supply 11 is composed of a battery such as a lithium ion battery or a nickel hydrogen battery, for example. Motor 12 is a brushless motor of a three-phase AC type.

Power conversion device 10 is connected to power supply 11 and motor 12. Power conversion device 10 converts power supply voltage supplied from power supply 11 into desired output voltage to drive motor 12 using the output voltage. Power conversion device 10 includes converter 20, drive power supply unit 25, control power supply unit 26, "n" pieces of ("n" is an integer of one or more) drive units 30, resonator 40, "n" pieces of auxiliary circuits 50, and controller 55.

Power conversion device 10 receives input voltage that is DC power supply voltage supplied from power supply 11 that is a DC power supply. Power conversion device 10 outputs output voltage that is three-phase AC voltage. The "n" described above is 3. Positive electrode line L1 is connected to a positive electrode of power supply 11. Negative electrode line L2 is connected to a negative electrode of power supply 11. Negative electrode line L2 is grounded.

Between positive electrode line L1 and negative electrode line L2, smoothing capacitor C1 is connected. Smoothing capacitor C1 smooths power supply voltage (DC power supply voltage) applied between positive electrode line L1 and negative electrode line L2. Specifically, smoothing capacitor C1 reduces ripples of power supply power, and absorbs surge voltage, for example. For example, smoothing capacitor C1 is composed of an electrolytic capacitor.

### [Converter]

Converter 20 includes "n" pieces of legs 21. The "n" pieces of legs 21 are similar in configuration to each other. Leg 21 includes high-side switching element SWH, low-side switching element SWL, high-side freewheeling diode DH, and low-side freewheeling diode DL. Converter 20 converts the input voltage into the output voltage by switching on and off of high-side switching element SWH and low-side switching element SWL included in leg 21.

### <Switching element>

High-side switching element SWH and low-side switching element SWL are connected in series between positive electrode line L1 and negative electrode line L2. High-side switching element SWH is connected at one end (collector or drain) to positive electrode line L1. High-side switching element SWH is connected at the other end (emitter or source) to one end (collector or drain) of low-side switching element SWL. Low-side switching element SWL is connected at the other end (emitter or source) to negative electrode line L2. Hereinafter, high-side switching element SWH and low-side switching element SWL will be collectively referred to as "switching element SW".

Switching element SW is turned on and off in response to a drive signal (voltage) supplied to a control terminal (gate) of switching element SW. Specifically, when voltage at the control terminal of switching element SW exceeds a threshold voltage, switching element SW is switched from off to on. When the voltage at the control terminal of switching element SW falls below the threshold voltage, switching element SW is switched from on to off. Examples of switching element SW include a field effect transistor (FET) such as a metal oxide semiconductor field effect transistor (MOSFET), and an insulated gate bipolar transistor (IGBT).

### <freewheeling diode>

High-side freewheeling diode DH is connected in parallel to high-side switching element SWH. High-side freewheeling diode DH has a direction from main connection point P2 toward positive electrode line L1, the direction being defined as a forward direction. Low-side freewheeling diode DL is connected in parallel to low-side switching element SWL. Low-side freewheeling diode DL has a direction from negative electrode line L2 toward main connection point P2, the direction being defined as a forward direction. Hereinafter, high-side freewheeling diode DH and low-side freewheeling diode DL are collectively referred to as "freewheeling diode DF". Freewheeling diode DF may be a parasitic diode which parasitics on switching element SW, or may be a diode element formed separately from switching element SW.

### <Main connection point>

Leg 21 includes main connection point P2 that is a connection point between high-side switching element SWH and low-side switching element SWL, the connection point being connected to output line L3. The "connection point between high-side switching element SWH and low-side switching element SWL" is a point located on a connection line that electrically connects high-side switching element SWH to low-side switching element SWL. The same applies to a subsequent "connection point".

Converter 20 includes three legs 21 corresponding to three phases of motor 12. Main connection point P2 in leg 21 corresponding to a U-phase of motor 12 is connected to output line L3 connected to an input terminal of the U-phase of motor 12. Main connection point P2 in leg 21 corresponding to a V-phase of motor 12 is connected to output line L3 connected to an input terminal of the V-phase of motor 12. Main connection point P2 in leg 21 corresponding to a W-phase of motor 12 is connected to output line L3 connected to an input terminal of the W-phase of motor 12.

### [Drive power supply unit]

Drive power supply unit 25 generates drive voltage based on input voltage. The drive voltage is used for controlling on and off of high-side switching element SWH and low-side switching element SWL. The drive voltage (DC voltage) generated by drive power supply unit 25 is supplied to drive line L25.

For example, drive power supply unit 25 includes a regulator, an input smoothing capacitor that smooths input voltage of the regulator, an output smoothing capacitor that smooths output voltage of the regulator, and the like. The regulator may be a series regulator or a switching regulator. For example, the input voltage is a voltage of 280 V, and the drive voltage is a voltage of 15 V.

### [Control power supply unit]

Control power supply unit 26 generates operating voltage of controller 55 based on the drive voltage generated by drive power supply unit 25. Control power supply unit 26 is similar in configuration to drive power supply unit 25. For example, the operating voltage (DC voltage) of controller 55 is a voltage of 3.3 V.

### [Drive unit]

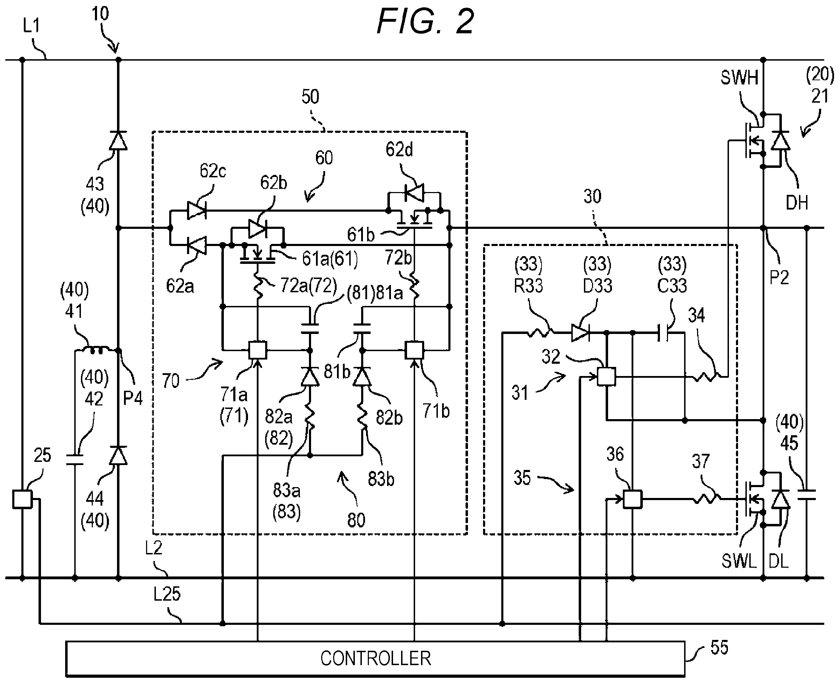

The "n" pieces of drive units 30 correspond to the "n" pieces of legs 21. Each of the "n" pieces of drive units 30 operates based on the drive voltage generated by drive power supply unit 25, and controls on and off of high-side switching element SWH and low-side switching element SWL included in leg 21 corresponding to the one of drive units 30. The "n" pieces of drive units 30 are similar in configuration to each other. Fig. 2 is a circuit diagram illustrating a configuration of auxiliary circuit 50 of the first exemplary embodiment. As illustrated in Fig. 2, drive unit 30 includes high-side drive unit 31 and low-side drive unit 35.

### <High-side drive unit>

High-side drive unit 31 controls on and off of high-side switching element SWH. High-side drive unit 31 includes high-side driver 32, high-side power supply unit 33, and high-side output resistive element 34.

### <<High-side driver>>

High-side driver 32 includes a positive terminal and a negative terminal. Voltage (operating voltage of high-side driver 32) for turning on high-side switching element SWH is applied to the positive terminal of high-side driver 32. Voltage (voltage to be reference potential) for turning off high-side switching element SWH is applied to the negative terminal of high-side driver 32.

High-side driver 32 connects one of the positive terminal and the negative terminal to a control terminal of high-side switching element SWH in response to control of controller 55 to supply one of the voltage of the positive terminal and the voltage of the negative terminal to the control terminal of high-side switching element SWH. This kind of operation switches a signal level (voltage) of a drive signal supplied from high-side driver 32 to the control terminal of high-side switching element SWH to switch on and off of high-side switching element SWH.

The positive terminal of high-side driver 32 is connected to one end of high-side power supply capacitor C33 described later. High-side power supply capacitor C33 generates voltage (operating voltage of high-side driver 32) that is applied to the positive terminal of high-side driver 32. The negative terminal of high-side driver 32 is connected to main connection point P2 at which voltage at main connection point P2 is applied.

### <<High-side power supply unit>>

High-side power supply unit 33 includes high-side power supply capacitor C33. High-side power supply capacitor C33 is configured to generate the operating voltage of high-side driver 32. High-side power supply unit 33 is configured to allow a current to flow from drive power supply unit 25 to main connection point P2 through high-side power supply capacitor C33 when low-side switching element SWL is turned on while high-side switching element SWH is turned off.

High-side power supply unit 33 includes high-side power supply diode D33 and high-side power supply resistive element R33 in addition to high-side power supply capacitor C33. High-side power supply unit 33 constitutes a bootstrap circuit.

High-side power supply capacitor C33 is connected between drive power supply unit 25 and main connection point P2. Specifically, high-side power supply capacitor C33 is connected at one end to drive line L25 through high-side power supply diode D33 and high-side power supply resistive element R33. High-side power supply capacitor C33 is connected at the other end to main connection point P2.

High-side power supply diode D33 is connected between drive power supply unit 25 and high-side power supply capacitor C33. High-side power supply diode D33 has a forward direction from drive power supply unit 25 toward high-side power supply capacitor C33. High-side power supply resistive element R33 is connected in series to high-side power supply diode D33 between drive power supply unit 25 and high-side power supply capacitor C33. Specifically, high-side power supply diode D33 includes an anode connected to drive line L25 through high-side power supply resistive element R33. High-side power supply diode D33 includes a cathode connected to the one end of high-side power supply capacitor C33.

### <<High-side output resistive element>>

High-side output resistive element 34 is connected between an output terminal of high-side driver 32 and the control terminal (gate) of high-side switching element SWH.

### <Low-side drive unit>

Low-side drive unit 35 controls on and off of low-side switching element SWL. Low-side drive unit 35 includes low-side driver 36 and low-side output resistive element 37.

### <<Low-side driver>>

Low-side driver 36 is similar in configuration to high-side driver 32. Voltage (operating voltage of low-side driver 36) for turning on low-side switching element SWL is applied to a positive terminal of low-side driver 36. Voltage (voltage to be reference potential) for turning off low-side switching element SWL is applied to a negative terminal of low-side driver 36.

Low-side driver 36 connects one of the positive terminal and the negative terminal to a control terminal of low-side switching element SWL in response to control of controller 55 to supply one of the voltage of the positive terminal and the voltage of the negative terminal to the control terminal of low-side switching element SWL. This kind of operation switches a signal level (voltage) of a drive signal supplied from low-side driver 36 to the control terminal of low-side switching element SWL to switch on and off of low-side switching element SWL.

The positive terminal of low-side driver 36 is connected to the one end of high-side power supply capacitor C33. High-side power supply capacitor C33 generates voltage that is applied to the positive terminal of low-side driver 36. The negative terminal of low-side driver 36 is connected to negative electrode line L2. Voltage in negative electrode line L2 is applied to the negative terminal of low-side driver 36. As described above, the voltage generated in high-side power supply capacitor C33 is supplied not only to the positive terminal of high-side driver 32 but also to the positive terminal of low-side driver 36. High-side power supply capacitor C33 is configured to generate the operating voltage of high-side driver 32 and the operating voltage of low-side driver 36.

### <<Low-side output resistive element>>

Low-side output resistive element 37 is connected between an output terminal of low-side driver 36 and the control terminal (gate) of low-side switching element SWL.

### [Resonator]

Resonator 40 includes resonant inductor 41, resonant power supply capacitor 42, first resonant diode 43, second resonant diode 44, and "n" pieces of resonant capacitors 45.

### <Resonant inductor and resonant power supply capacitor>

Resonant power supply capacitor 42 is connected to resonant inductor 41. Specifically, resonant inductor 41 is connected at one end to the "n" pieces of auxiliary circuits 50. Resonant inductor 41 is connected at the other end to one end of resonant power supply capacitor 42. Resonant power supply capacitor 42 is connected at the other end to negative electrode line L2. Resonant power supply capacitor 42 is connected between resonant inductor 41 and negative electrode line L2.

### <Resonant diode>

First resonant diode 43 and second resonant diode 44 are connected in series between positive electrode line L1 and negative electrode line L2. First resonant diode 43 is connected to positive electrode line L1. Second resonant diode 44 is connected to negative electrode line L2. Resonant inductor 41 and the "n" pieces of auxiliary circuits 50 are connected to resonant connection point P4 at which first resonant diode 43 is connected to second resonant diode 44. First resonant diode 43 has a direction from resonant connection point P4 toward positive electrode line L1, the direction being defined as a forward direction. Second resonant diode 44 has a direction from negative electrode line L2 toward resonant connection point P4, the direction being defined as a forward direction.

### <Resonant capacitor>

The "n" pieces of resonant capacitors 45 correspond to the "n" pieces of legs 21. Each of the "n" pieces of resonant capacitors 45 is connected to main connection point P2 (connection point between high-side switching element SWH and low-side switching element SWL) of leg 21 corresponding to the one of resonant capacitors 45. Specifically, resonant capacitor 45 is connected at one end to main connection point P2. Resonant capacitor 45 is connected at the other end to negative electrode line L2. Resonant capacitor 45 is connected in parallel to low-side switching element SWL between main connection point P2 and negative electrode line L2.

### [Auxiliary circuit]

As illustrated in Fig. 1, the "n" pieces of auxiliary circuits 50 correspond to the "n" pieces of legs 21. The "n" pieces of auxiliary circuits 50 are similar in configuration to each other. As illustrated in Fig. 2, auxiliary circuit 50 includes auxiliary switching unit 60, auxiliary drive unit 70, and auxiliary power supply unit 80.

### <Auxiliary switching unit>

Auxiliary switching unit 60 includes auxiliary switching element 61. Auxiliary switching element 61 is provided between main connection point P2 and resonant inductor 41. Auxiliary switching unit 60 is configured to allow a current to flow between main connection point P2 and resonant inductor 41 when auxiliary switching element 61 is turned on.

Auxiliary switching unit 60 includes first auxiliary switching element 61a and second auxiliary switching element 61b. First auxiliary switching element 61a and second auxiliary switching element 61b are provided between main connection point P2 and resonant inductor 41. Auxiliary switching unit 60 is configured to allow a current to flow from main connection point P2 toward resonant inductor 41 when first auxiliary switching element 61a is turned on and second auxiliary switching element 61b is turned off, and to allow a current to flow from resonant inductor 41 toward main connection point P2 when first auxiliary switching element 61a is turned off and second auxiliary switching element 61b is turned on. First auxiliary switching element 61a corresponds to auxiliary switching element 61 described above.

Specifically, auxiliary switching unit 60 includes first auxiliary diode 62a, second auxiliary diode 62b, third auxiliary diode 62c, and fourth auxiliary diode 62d in addition to first auxiliary switching element 61a and second auxiliary switching element 61b.

First auxiliary switching element 61a and second auxiliary switching element 61b are connected in parallel between main connection point P2 and resonant inductor 41.

First auxiliary diode 62a is connected between first auxiliary switching element 61a and resonant inductor 41. First auxiliary diode 62a has a direction from first auxiliary switching element 61a toward resonant inductor 41, the direction being defined as a forward direction. Second auxiliary diode 62b is connected in parallel to first auxiliary switching element 61a between main connection point P2 and first auxiliary diode 62a. Second auxiliary diode 62b has a direction from first auxiliary diode 62a toward main connection point P2, the direction being defined as a forward direction.

Third auxiliary diode 62c is connected between second auxiliary switching element 61b and resonant inductor 41. Third auxiliary diode 62c has a direction from resonant inductor 41 toward second auxiliary switching element 61b, the direction being defined as a forward direction. Fourth auxiliary diode 62d is connected in parallel to second auxiliary switching element 61b between main connection point P2 and third auxiliary diode 62c. Fourth auxiliary diode 62d has a direction from main connection point P2 toward third auxiliary diode 62c, the direction being defined as a forward direction.

Specifically, first auxiliary switching element 61a is connected at one end (collector or drain) to main connection point P2. First auxiliary switching element 61a is connected at the other end (emitter or source) to an anode of first auxiliary diode 62a. First auxiliary diode 62a includes a cathode connected to resonant connection point P4. Second auxiliary diode 62b includes an anode connected to the other end of first auxiliary switching element 61a. Second auxiliary diode 62b includes a cathode connected to the one end of first auxiliary switching element 61a.

Second auxiliary switching element 61b is connected at one end (collector or drain) to a cathode of third auxiliary diode 62c. Second auxiliary switching element 61b is connected at the other end (emitter or source) to main connection point P2. Third auxiliary diode 62c includes an anode connected to resonant connection point P4. Fourth auxiliary diode 62d includes an anode connected to the other end of second auxiliary switching element 61b. Fourth auxiliary diode 62d includes a cathode connected to the one end of second auxiliary switching element 61b.

First auxiliary switching element 61a and second auxiliary switching element 61b are each similar in configuration to switching element SW. When voltage at a control terminal of first auxiliary switching element 61a exceeds the threshold voltage, the first auxiliary switching element 61a is switched from off to on, and when the voltage at the control terminal of first auxiliary switching element 61a falls below the threshold voltage, first auxiliary switching element 61a is switched from on to off. Second auxiliary switching element 61b is similar in operation to first auxiliary switching element 61a.

First auxiliary switching element 61a and second auxiliary diode 62b may be similar in configuration to switching element SW and freewheeling diode DF. Second auxiliary switching element 61b and fourth auxiliary diode 62d may be similar in configuration to switching element SW and freewheeling diode DF.

### <Auxiliary drive unit>

Auxiliary drive unit 70 includes auxiliary driver 71. Auxiliary driver 71 controls on and off of auxiliary switching element 61. Auxiliary drive unit 70 includes first auxiliary driver 71a, second auxiliary driver 71b, first auxiliary output resistive element 72a, and second auxiliary output resistive element 72b. First auxiliary driver 71a corresponds to auxiliary driver 71 described above.

### <<First auxiliary driver>>

First auxiliary driver 71a controls on and off of first auxiliary switching element 61a. First auxiliary driver 71a is similar in configuration to high-side driver 32. Voltage (operating voltage of first auxiliary driver 71a) for turning on first auxiliary switching element 61a is applied to a positive terminal of first auxiliary driver 71a. Voltage (voltage to be reference potential) for turning off first auxiliary driver 71a is applied to a negative terminal of first auxiliary driver 71a.

First auxiliary driver 71a connects one of the positive terminal and the negative terminal to a control terminal of first auxiliary driver 71a in response to control of controller 55 to supply one of the voltage of the positive terminal and the voltage of the negative terminal to the control terminal of first auxiliary switching element 61a. This kind of operation switches a signal level (voltage) of a drive signal supplied from first auxiliary driver 71a to the control terminal of first auxiliary switching element 61a to switch on and off of first auxiliary switching element 61a.

The positive terminal of first auxiliary driver 71a is connected to one end of first auxiliary power supply capacitor 81a described later. First auxiliary power supply capacitor 81a generates voltage that is applied to the positive terminal of first auxiliary driver 71a. The negative terminal of first auxiliary driver 71a is connected to a connection point between first auxiliary switching element 61a and first auxiliary diode 62a. Voltage at the connection point between first auxiliary switching element 61a and first auxiliary diode 62a is applied to the negative terminal of first auxiliary driver 71a.

### <<First auxiliary output resistive element>>

First auxiliary output resistive element 72a is connected between an output terminal of first auxiliary driver 71a and the control terminal (gate) of first auxiliary switching element 61a. First auxiliary output resistive element 72a corresponds to "auxiliary output resistive element 72 connected between an output terminal of auxiliary driver 71 and a control terminal of auxiliary switching element 61".

### <<Second auxiliary driver>>

Second auxiliary driver 71b controls on and off of second auxiliary switching element 61b.

Second auxiliary driver 71b controls on and off of second auxiliary switching element 61b. Second auxiliary driver 71b is similar in configuration to high-side driver 32. Voltage (operating voltage of second auxiliary driver 71b) for turning on second auxiliary switching element 61b is applied to a positive terminal of second auxiliary driver 71b. Voltage (voltage to be reference potential) for turning off second auxiliary driver 71b is applied to a negative terminal of second auxiliary driver 71b. Second auxiliary driver 71b connects one of the positive terminal and the negative terminal to a control terminal of second auxiliary driver 71b in response to control of controller 55 to supply one of the voltage of the positive terminal and the voltage of the negative terminal to the control terminal of second auxiliary switching element 61b. This kind of operation switches a signal level (voltage) of a drive signal supplied from second auxiliary driver 71b to second auxiliary switching element 61b to switch on and off of second auxiliary switching element 61b.

The positive terminal of second auxiliary driver 71b is connected to one end of second auxiliary power supply capacitor 81b described later. Second auxiliary power supply capacitor 81b generates voltage that is applied to the positive terminal of second auxiliary driver 71b. The negative terminal of second auxiliary driver 71b is connected to main connection point P2 at which voltage at main connection point P2 is applied.

### <<Second auxiliary output resistive element>>

Second auxiliary output resistive element 72b is connected between an output terminal of second auxiliary driver 71b and a control terminal (gate) of second auxiliary switching element 61b.

### [Auxiliary power supply unit]

Auxiliary power supply unit 80 includes auxiliary power supply capacitor 81. Auxiliary power supply capacitor 81 is configured to generate operating voltage of auxiliary driver 71. Auxiliary power supply unit 80 is configured to allow a current to flow from drive power supply unit 25 toward main connection point P2 through auxiliary power supply capacitor 81 when low-side switching element SWL is turned on while auxiliary switching element 61 is turned off and high-side switching element SWH is turned off.

Auxiliary power supply unit 80 includes first auxiliary power supply capacitor 81a and second auxiliary power supply capacitor 81b. First auxiliary power supply capacitor 81a is configured to generate the operating voltage of first auxiliary driver 71a. Second auxiliary power supply capacitor 81b is configured to generate the operating voltage of second auxiliary driver 71b. First auxiliary power supply capacitor 81a corresponds to auxiliary power supply capacitor 81 described above.

Auxiliary power supply unit 80 is configured to allow a current to flow from drive power supply unit 25 toward main connection point P2 through first auxiliary power supply capacitor 81a and second auxiliary power supply capacitor 81b when low-side switching element SWL is turned on while first auxiliary switching element 61a and second auxiliary switching element 61b are turned off and high-side switching element SWH is turned off.

Specifically, auxiliary power supply unit 80 includes first auxiliary power supply diode 82a, first auxiliary power supply resistive element 83a, second auxiliary power supply diode 82b, and second auxiliary power supply resistive element 83b in addition to first auxiliary power supply capacitor 81a and second auxiliary power supply capacitor 81b. First auxiliary power supply capacitor 81a, first auxiliary power supply diode 82a, and first auxiliary power supply resistive element 83a constitute a bootstrap circuit. Similarly, second auxiliary power supply capacitor 81b, second auxiliary power supply diode 82b, and second auxiliary power supply resistive element 83b constitute a bootstrap circuit.

### <<First auxiliary power supply capacitor>>

First auxiliary power supply capacitor 81a is connected between the connection point between first auxiliary switching element 61a and first auxiliary diode 62a, and drive power supply unit 25. Specifically, first auxiliary power supply capacitor 81a is connected at one end to drive line L25 through first auxiliary power supply diode 82a and first auxiliary power supply resistive element 83a. First auxiliary power supply capacitor 81a is connected at the other end to the connection point between first auxiliary switching element 61a and first auxiliary diode 62a.

### <<First auxiliary power supply diode and first auxiliary power supply resistive element>>

First auxiliary power supply diode 82a is connected between drive power supply unit 25 and first auxiliary power supply capacitor 81a. First auxiliary power supply diode 82a has a direction from drive power supply unit 25 toward first auxiliary power supply capacitor 81a, the direction being defined as a forward direction. First auxiliary power supply resistive element 83a is connected in series to first auxiliary power supply diode 82a between drive power supply unit 25 and first auxiliary power supply capacitor 81a. Specifically, first auxiliary power supply diode 82a includes an anode connected to drive line L25 through first auxiliary power supply resistive element 83a. First auxiliary power supply diode 82a includes a cathode connected to one end of first auxiliary power supply capacitor 81a.

### <<Second auxiliary power supply capacitor>>

Second auxiliary power supply capacitor 81b is connected between main connection point P2 and drive power supply unit 25. Specifically, second auxiliary power supply capacitor 81b is connected at one end to drive line L25 through second auxiliary power supply diode 82b and second auxiliary power supply resistive element 83b. Second auxiliary power supply capacitor 81b is connected at the other end to main connection point P2.

### <<Second auxiliary power supply diode and second auxiliary power supply resistive element>>

Second auxiliary power supply diode 82b is connected between drive power supply unit 25 and second auxiliary power supply capacitor 81b. Second auxiliary power supply diode 82b has a direction from drive power supply unit 25 toward second auxiliary power supply capacitor 81b, the direction being defined as a forward direction. Second auxiliary power supply resistive element 83b is connected in series to second auxiliary power supply diode 82b between drive power supply unit 25 and second auxiliary power supply capacitor 81b. Specifically, second auxiliary power supply diode 82b includes an anode connected to drive line L25 through second auxiliary power supply resistive element 83b. Second auxiliary power supply diode 82b includes a cathode connected to the one end of second auxiliary power supply capacitor 81b.

First auxiliary power supply diode 82a corresponds to "auxiliary power supply diode 82 that is connected between drive power supply unit 25 and auxiliary power supply capacitor 81, and has a direction from drive power supply unit 25 toward auxiliary power supply capacitor 81, the direction being defined as a forward direction". First auxiliary power supply resistive element 83a corresponds to "auxiliary power supply resistive element 83 connected in series to auxiliary power supply diode 82 between drive power supply unit 25 and auxiliary power supply capacitor 81".

### [Various sensors and storage unit]

Power conversion device 10 is provided with various sensors (not illustrated) and a storage unit (not illustrated). Examples of the various sensors include a current sensor that detects three-phase currents flowing through motor 12, and a rotation angle sensor that detects a rotation angle of motor 12. The various sensors acquire various types of information that are transmitted to controller 55. The storage unit stores various types of information used for control in power conversion device 10.

### [Controller]

Controller 55 is connected to each unit of power conversion device 10 while being capable of transmitting a signal, and controls each unit of power conversion device 10 based on information acquired by the various sensors, information stored in the storage unit, information given from the outside, and the like, thereby controlling operation of power conversion device 10.

For example, controller 55 includes a processor and a memory that stores various programs for operating the processor. When the processor executes the various programs stored in the memory, various functions of controller 55 are implemented.

Controller 55 controls the "n" pieces of drive units 30 to convert input voltage into desired output voltage by turning on and off switching elements SW in the "n" pieces of legs 21. For example, controller 55 controls high-side driver 32 and low-side driver 36 of each of the "n" pieces of drive units 30 to control on and off of high-side switching element SWH and low-side switching element SWL of each of the "n" pieces of legs 21, thereby causing rotation speed of motor 12 to become target rotation speed (to supply output voltage for causing rotation speed of motor 12 to become target rotation speed to motor 12).

Controller 55 controls the "n" pieces of auxiliary circuits 50 to reduce a loss (switching loss) at the time of switching on and off of switching element SW in each of the "n" pieces of legs 21. Controller 55 controls auxiliary driver 71 (first auxiliary driver 71a and second auxiliary driver 71b) of each of the "n" pieces of auxiliary circuits 50 to control on and off of auxiliary switching element 61 (first auxiliary switching element 61a and second auxiliary switching element 61b) of auxiliary circuit 50, thereby performing zero-volt switching in each of the "n" pieces of legs 21.

### [Charging operation of auxiliary power supply capacitor]

Next, charging operation of auxiliary power supply capacitor 81 (first auxiliary power supply capacitor 81a and second auxiliary power supply capacitor 81b) in auxiliary circuit 50 will be described with reference to Fig. 2.

When low-side switching element SWL is turned on while not only auxiliary switching element 61 (first auxiliary switching element 61a and second auxiliary switching element 61b) but also high-side switching element SWH is turned off, a current flows from drive power supply unit 25 into auxiliary power supply unit 80 through drive line L25.

A part of the current having flowed into auxiliary power supply unit 80 passes through first auxiliary power supply resistive element 83a, first auxiliary power supply diode 82a, and first auxiliary power supply capacitor 81a in order in auxiliary power supply unit 80, and passes through second auxiliary diode 62b in auxiliary switching unit 60. Then, the part of the current having flowed into auxiliary power supply unit 80 passes through main connection point P2 and low-side switching element SWL in an on state in order, and flows into negative electrode line L2. In this way, a charging path of first auxiliary power supply capacitor 81a is formed to charge first auxiliary power supply capacitor 81a.

The remnant of the current having flowed into auxiliary power supply unit 80 passes through second auxiliary power supply resistive element 83b, second auxiliary power supply diode 82b, and second auxiliary power supply capacitor 81b in order in auxiliary power supply unit 80. Then, the remnant of the current having flowed into auxiliary power supply unit 80 passes through main connection point P2 and low-side switching element SWL in an on state in order, and flows into negative electrode line L2. In this way, a charging path of second auxiliary power supply capacitor 81b is formed to charge second auxiliary power supply capacitor 81b.

### [Operation of power conversion device]

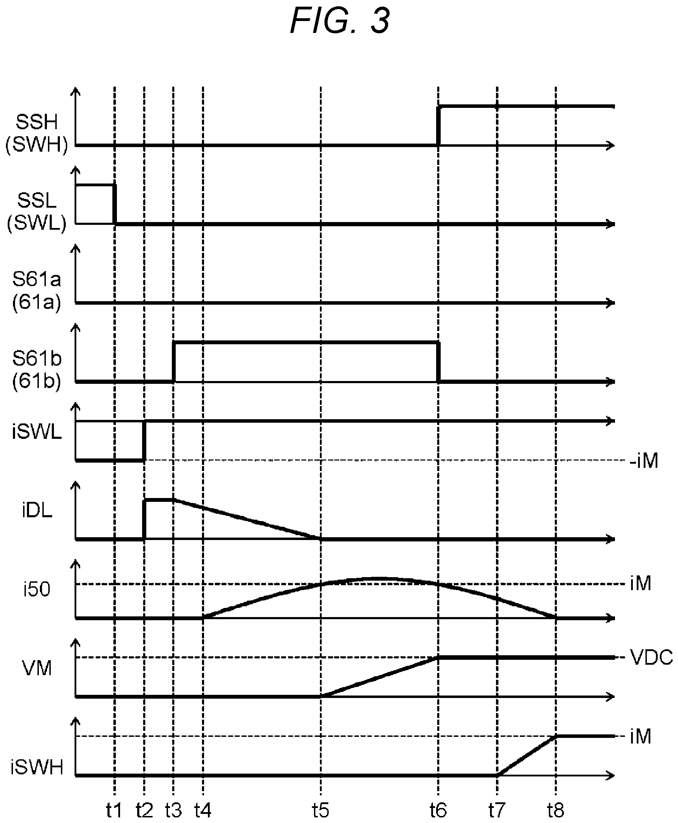

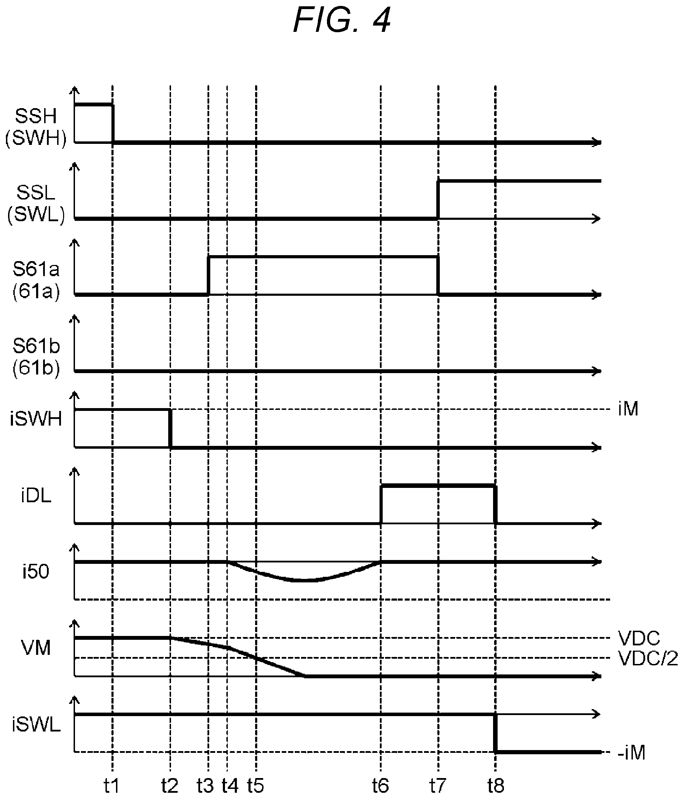

Next, the operation of power conversion device 10 will be described with reference to Figs. 3 and 4. Fig. 3 is a waveform chart for illustrating a first operation (operation of turning on a high-side switching element after turning off a low-side switching element) of power conversion device 10. Fig. 4 is a waveform chart for illustrating a second operation (operation of turning on the low-side switching element after turning off the high-side switching element) of power conversion device 10.

Figs. 3 and 4 each show a drive signal supplied from high-side driver 32 to high-side switching element SWH, the drive signal being referred to as "high-side drive signal SSH", and a drive signal supplied from low-side driver 36 to low-side switching element SWL, the drive signal being referred to as "low-side drive signal SSL". Figs. 3 and 4 each also show a drive signal supplied from first auxiliary driver 71a to first auxiliary switching element 61a, the drive signal being referred to as "first auxiliary drive signal S61a", and a drive signal supplied from second auxiliary driver 71b to second auxiliary switching element 61b, the drive signal being referred to as "second auxiliary drive signal S61b".

Figs. 3 and 4 each show a current flowing through high-side switching element SWH, the current being referred to as "high-side switching current iSWH", a current flowing through low-side switching element SWL, the current being referred to as "low-side switching current iSWL", and a current flowing through low-side freewheeling diode DL, the current being referred to as "low-side diode current iDL".

Figs. 3 and 4 each show a current flowing through auxiliary circuit 50 to resonator 40 (resonant inductor 41) and leg 21, the current being referred to as "resonant current i50", and voltage of each phase (e.g., U phase) of motor 12 at main connection point P2, the voltage being referred to as "motor voltage VM". Resonant current i50 flows in a direction from resonant inductor 41 toward main connection point P2, the direction being defined as "positive".

### [First operation of power conversion device]

With reference to Fig. 3, the first operation (operation of turning on a high-side switching element after turning off a low-side switching element) of power conversion device 10 will be described.

At time t1, a signal level of low-side drive signal SSL changes from a high level to a low level to change low-side switching element SWL from on to off.

At time t2, low-side switching element SWL is turned off, and low-side diode current iDL (regenerative current) starts flowing.

At time t3, a signal level of second auxiliary drive signal S61b changes from a low level to a high level to change second auxiliary switching element 61b from off to on.

At time t4, second auxiliary switching element 61b is turned on to allow resonant current i50 to start flowing from resonant inductor 41 of resonator 40 toward main connection point P2 of leg 21. Consequently, low-side diode current iDL gradually decreases. Resonant current i50 gradually increases from zero and gradually decreases to zero after reaching a maximum value in a period from time t4 to time t8.

At time t5, resonant current i50 having been rising reaches motor current iM. Motor current iM flows through each phase (e.g., U phase) of motor 12. Consequently, low-side diode current iDL becomes zero. Then, motor voltage VM starts rising from zero.

At time t6, resonant current i50 having been decreasing reaches motor current iM. At this time, motor voltage VM reaches DC voltage VDC. DC voltage VDC is input voltage applied between positive electrode line L1 and negative electrode line L2. Consequently, voltage at main connection point P2 becomes equal to voltage in positive electrode line L1 to cause a potential difference between both ends of high-side switching element SWH to become zero.

At time t6, a signal level of high-side drive signal SSH changes from a low level to a high level to change high-side switching element SWH from off to on with a potential difference of zero between both the ends of high-side switching element SWH.

At time t6, a signal level of second auxiliary drive signal S61b changes from a high level to a low level to change second auxiliary switching element 61b from on to off.

At time t7, high-side switching element SWH is turned on to cause high-side switching current iSWH to have an absolute value equal to that of motor current iM. That is, motor current iM starts flowing through high-side switching element SWH.

At time t8, resonant current i50 becomes zero. The first operation (operation of turning on a high-side switching element after turning off a low-side switching element) of power conversion device 10 ends.

In this way, the zero-volt switching of high-side switching element SWH can be performed in the first operation of power conversion device 10. Consequently, a switching loss in high-side switching element SWH can be reduced.

### [Second operation of power conversion device]

With reference to Fig. 4, the second operation (operation of turning on the low-side switching element after turning off the high-side switching element) of power conversion device 10 will be described.

At time t1, the signal level of high-side drive signal SSH changes from the high level to the low level to change high-side switching element SWH from on to off.

At time t2, high-side switching element SWH is turned off to start discharging resonant capacitor 45 with the motor current, and then the motor voltage VM starts decreasing.

At time t3, a signal level of first auxiliary drive signal S61a changes from a low level to a high level to change first auxiliary switching element 61a from off to on.

At time t4, first auxiliary switching element 61a is turned on to allow resonant current i50 to start flowing from resonant capacitor 45 toward resonant inductor 41 through main connection point P2 of leg 21.

At time t5, motor voltage VM reaches "1/2 of DC voltage VDC". Consequently, increase in resonant current i50 is suppressed. Motor voltage VM gradually decreases to zero in a period after time t5. When motor voltage VM becomes zero, voltage at main connection point P2 becomes equal to voltage in negative electrode line L2 to cause a potential difference between both ends of low-side switching element SWL to become zero.

At time t6, resonant current i50 becomes zero to allow low-side diode current iDL to start flowing.

At time t7, the signal level of low-side drive signal SSL changes from the low level to the high level to change low-side switching element SWL from off to on with a potential difference of zero between both the ends of low-side switching element SWL.

At time t7, the signal level of first auxiliary drive signal S61a changes from the high level to the low level to change first auxiliary switching element 61a from on to off.

At time t8, low-side switching element SWL is turned on to cause low-side switching current iSWL to have an absolute value equal to that of motor current iM. That is, motor current iM starts flowing through low-side switching element SWL.

Then, the second operation (operation of turning on a low-side switching element after turning off a high-side switching element) of power conversion device 10 ends.

In this way, the zero-volt switching of low-side switching element SWL can be performed in the second operation of power conversion device 10. Consequently, a switching loss in low-side switching element SWL can be reduced.

### [Effects of first exemplary embodiment]

As described above, motor unit 1 of the first exemplary embodiment includes auxiliary power supply unit 80 that is configured to allow a current to flow from drive power supply unit 25 toward main connection point P2 (connection point between high-side switching element SWH and low-side switching element SWL) through auxiliary power supply capacitor 81 when low-side switching element SWL is turned on while auxiliary switching element 61 is turned off and high-side switching element SWH is turned off.

The configuration described above enables charging auxiliary power supply capacitor 81 using the drive voltage generated by drive power supply unit 25. Consequently, the operating voltage of auxiliary driver 71 can be generated in auxiliary power supply capacitor 81. As described above, the operating voltage of auxiliary driver 71 can be generated without independently providing an additional power supply such as a floating power supply.

In addition to drive power supply unit 25 that generates the drive voltage (operating voltage of drive unit 30) based on the input voltage input to power conversion device 10, an additional power supply (e.g., a power supply with an isolation transformer) does not need to be provided, the additional power supply being configured to independently generate the operating voltage of auxiliary driver 71 based on the input voltage input to power conversion device 10. Thus, the auxiliary circuit can be reduced in size and cost as compared with when an additional power supply as described above is provided.

### (First modification of first exemplary embodiment)

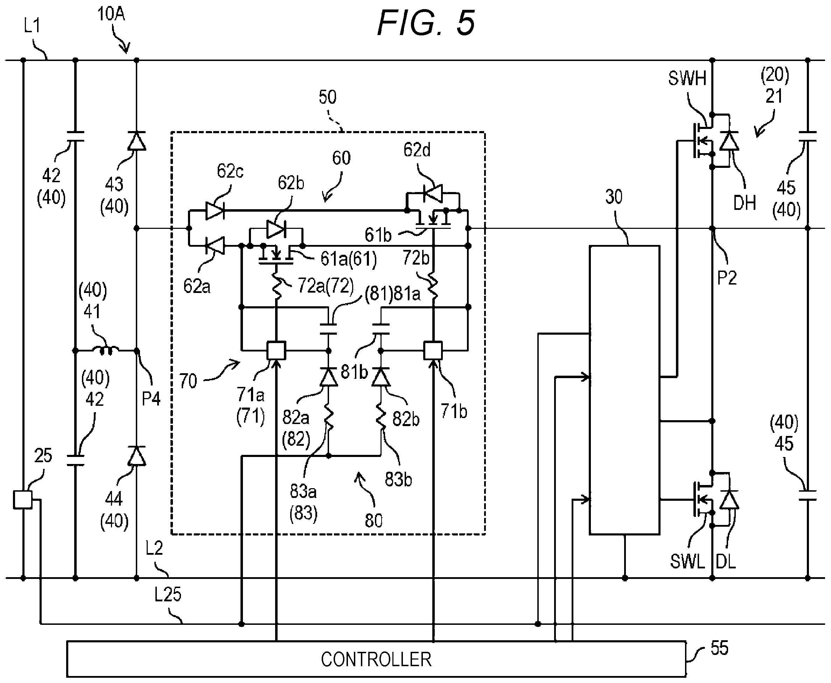

Fig. 5 is a circuit diagram illustrating a configuration of power conversion device 10A according to a first modification of the first exemplary embodiment. Power conversion device 10A according to the first modification of the first exemplary embodiment is different in configuration of resonator 40 from power conversion device 10 according to the first exemplary embodiment. Power conversion device 10A according to the first modification of the first exemplary embodiment is similar in other configurations to power conversion device 10 according to the first exemplary embodiment.

Resonator 40 in the first modification of the first exemplary embodiment includes resonant power supply capacitor 42 connected between positive electrode line L1 and resonant inductor 41, and "n" pieces of resonant capacitors 45 each connected between positive electrode line L1 and main connection point P2 of corresponding one of the "n" pieces of legs 21 in addition to the configuration of resonator 40 illustrated in Figs. 1 and 2.

### [Effects of first modification of first exemplary embodiment]

Motor unit 1 of the first modification of the first exemplary embodiment can obtain an effect similar to that of motor unit 1 of the first exemplary embodiment.

Motor unit 1 of the first modification of the first exemplary embodiment can quickly set voltage (both-end voltage) of resonant power supply capacitor 42 to "1/2 of input voltage" immediately after power is turned on. Consequently, operation of power conversion device 10A at the time of activation can be stabilized.

Motor unit 1 of the first modification of the first exemplary embodiment includes resonant capacitor 45 that can be disposed near switching element SW. Thus, wiring related to switching element SW and resonant capacitor 45 can be facilitated on a control board (not illustrated).

### (Second modification of first exemplary embodiment)

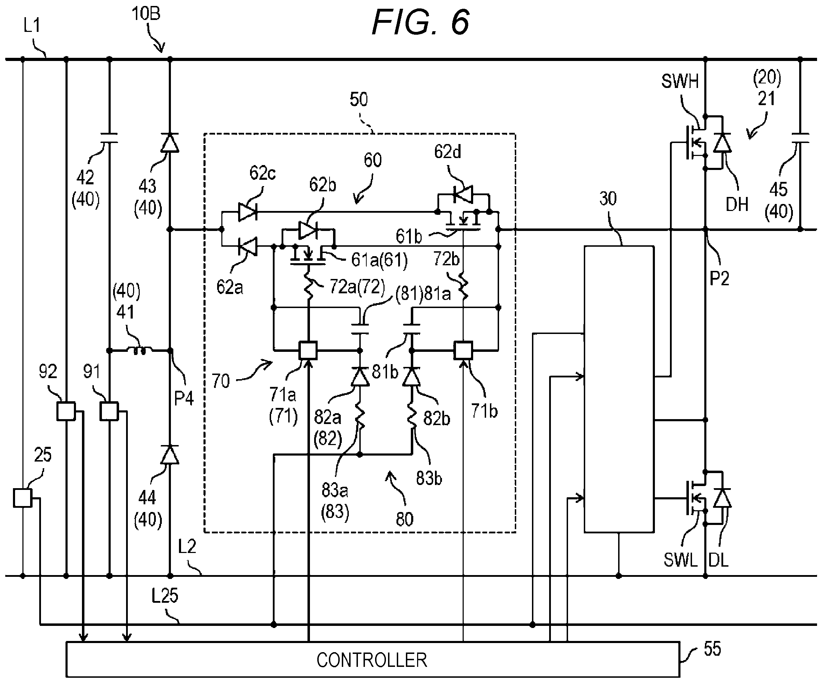

Fig. 6 is a circuit diagram illustrating a configuration of power conversion device 10B according to a second modification of the first exemplary embodiment. Power conversion device 10B according to the second modification of the first exemplary embodiment is different in configuration of resonator 40 from power conversion device 10 according to the first exemplary embodiment. Power conversion device 10B according to the second modification of the first exemplary embodiment includes resonant voltage sensor 91 and power supply voltage sensor 92. Resonant voltage sensor 91 detects voltage (both-end voltage) of resonant power supply capacitor 42. Power supply voltage sensor 92 detects input voltage. Power conversion device 10B according to the second modification of the first exemplary embodiment is similar in other configurations to power conversion device 10 according to the first exemplary embodiment.

### [Resonator]

The second modification of the first exemplary embodiment includes resonator 40 in which resonant power supply capacitor 42 is connected between positive electrode line L1 and resonant inductor 41. Between positive electrode line L1 and main connection points P2 of each of "n" pieces of legs 21, corresponding one of "n" pieces of resonant capacitors 45 is connected. Resonator 40 according to the second modification of the first exemplary embodiment is similar in other configurations to resonator 40 according to the first exemplary embodiment.

### [Effects of second modification of first exemplary embodiment]

Motor unit 1 of the second modification of the first exemplary embodiment can obtain an effect similar to that of motor unit 1 of the first exemplary embodiment.

Motor unit 1 of the second modification of the first exemplary embodiment can appropriately start power conversion device 10B while monitoring the voltage of resonant power supply capacitor 42 detected by resonant voltage sensor 91 and the input voltage detected by power supply voltage sensor 92.

### (Third modification of first exemplary embodiment)

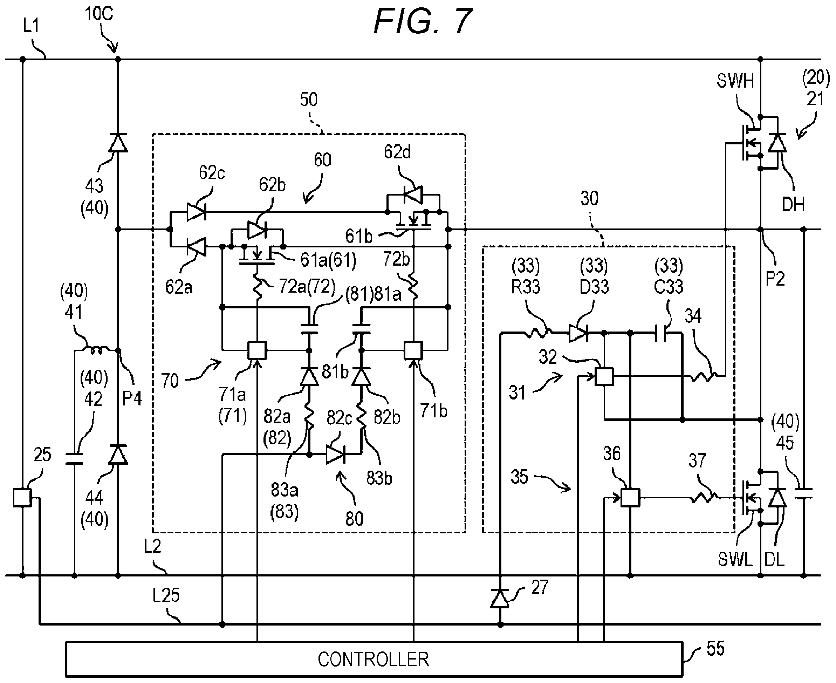

Fig. 7 is a circuit diagram illustrating a configuration of power conversion device 10C according to a third modification of the first exemplary embodiment. Power conversion device 10C according to the third modification of the first exemplary embodiment is different in configuration of "n" pieces of auxiliary circuits 50 from power conversion device 10 according to the first exemplary embodiment. Power conversion device 10C according to the third modification of the first exemplary embodiment includes "n" pieces of drive diodes 27. Power conversion device 10C according to the third modification of the first exemplary embodiment is similar in other configurations to power conversion device 10 according to the first exemplary embodiment.

### [Auxiliary circuit]

The third modification of the first exemplary embodiment includes the "n" pieces of auxiliary circuits 50 in each of which auxiliary power supply unit 80 includes third auxiliary power supply diode 82c in addition to the configuration of auxiliary power supply unit 80 illustrated in Fig. 2. Auxiliary circuit 50 according to the third modification of the first exemplary embodiment is similar in other configurations to auxiliary circuit 50 according to the first exemplary embodiment.

Third auxiliary power supply diode 82c is connected at one end to drive power supply unit 25 (drive line L25 in this example). Third auxiliary power supply diode 82c has a direction from the one end to the other end, the direction being defined as a forward direction. First auxiliary power supply diode 82a and first auxiliary power supply resistive element 83a are connected between the one end (anode) of third auxiliary power supply diode 82c and first auxiliary power supply capacitor 81a. Second auxiliary power supply diode 82b and second auxiliary power supply resistive element 83b are connected between the other end (cathode) of third auxiliary power supply diode 82c and second auxiliary power supply capacitor 81b.

### [Drive diode]

The "n" pieces of drive diodes 27 correspond to the respective "n" pieces of drive units 30. Each of the "n" pieces of drive diodes 27 is connected between high-side power supply unit 33 of corresponding one of drive units 30 and drive power supply unit 25 (drive line L25 in this example). Each of the "n" pieces of drive diodes 27 has a direction from drive power supply unit 25 toward high-side power supply unit 33, the direction being defined as a forward direction. Specifically, drive diode 27 includes an anode connected to drive line L25. Drive diode 27 includes a cathode connected to the one end of high-side power supply capacitor C33 through high-side power supply resistive element R33 and high-side power supply diode D33 of high-side power supply unit 33.

### [Effects of third modification of first exemplary embodiment]

Motor unit 1 of the third modification of the first exemplary embodiment can obtain an effect similar to that of motor unit 1 of the first exemplary embodiment.

Motor unit 1 according to the third modification of the first exemplary embodiment is provided with third auxiliary power supply diode 82c to enable facilitating reduction in difference between "voltage generated in first auxiliary power supply capacitor 81a" and "voltage generated in second auxiliary power supply capacitor 81b" (easily causing these voltages to be equal to each other). Consequently, a difference in operation between first auxiliary driver 71a and second auxiliary driver 71b (e.g., a time difference between charging and discharging at the control terminal of auxiliary switching element 61) can be easily reduced.

Motor unit 1 of the third modification of the first exemplary embodiment is provided with the "n" pieces of drive diodes 27 to enable facilitating reduction in difference in "voltage generated in high-side power supply capacitor C33" included in each of the "n" pieces of drive units 30 (easily causing these voltages to be equal to each other). Consequently, a difference in operation of each of the "n" pieces of drive units 30 (e.g., a time difference between charging and discharging at the control terminal of switching element SW) can be easily reduced.

### (Fourth modification of first exemplary embodiment)

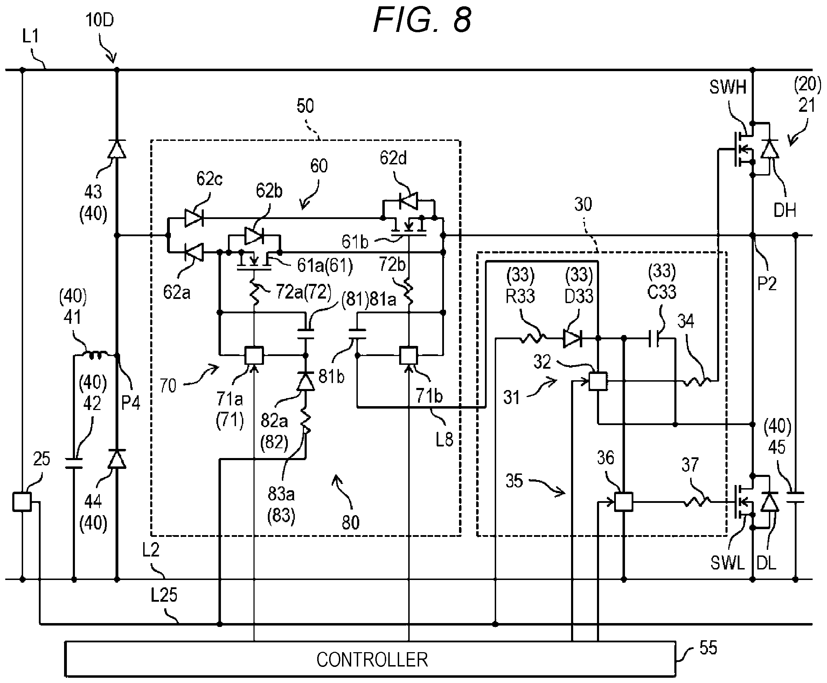

Fig. 8 is a circuit diagram illustrating a configuration of power conversion device 10D according to a fourth modification of the first exemplary embodiment. Power conversion device 10D according to the fourth modification of the first exemplary embodiment is different in configuration of "n" pieces of auxiliary circuits 50 from power conversion device 10 according to the first exemplary embodiment. Power conversion device 10D according to the fourth modification of the first exemplary embodiment is similar in other configurations to power conversion device 10 according to the first exemplary embodiment.

### [Auxiliary circuit]

The fourth modification of the first exemplary embodiment includes the "n" pieces of auxiliary circuits 50 in each of which auxiliary power supply unit 80 is configured to allow a part of a current to flow to main connection point P2 through second auxiliary power supply capacitor 81b, the current flowing from drive power supply unit 25 to high-side power supply capacitor C33 in high-side power supply unit 33 provided in drive unit 30 corresponding to the one of auxiliary circuits 50.

In this example, auxiliary power supply unit 80 of the fourth modification of the first exemplary embodiment includes auxiliary power supply line L8 instead of second auxiliary power supply diode 82b and second auxiliary power supply resistive element 83b illustrated in Fig. 2. Auxiliary power supply line L8 connects one end of second auxiliary power supply capacitor 81b to one end of high-side power supply capacitor C33 (a connection point between high-side power supply capacitor C33 and high-side power supply diode D33). Auxiliary power supply unit 80 according to the fourth modification of the first exemplary embodiment is similar in other configurations to auxiliary power supply unit 80 according to the first exemplary embodiment.

### [Effects of fourth modification of first exemplary embodiment]

Motor unit 1 of the fourth modification of the first exemplary embodiment can obtain an effect similar to that of motor unit 1 of the first exemplary embodiment.

Motor unit 1 of the fourth modification of the first exemplary embodiment can include no second auxiliary power supply diode 82b and no second auxiliary power supply resistive element 83b illustrated in Fig. 2. Thus, auxiliary circuit 50 can be downsized.

### (Second exemplary embodiment)

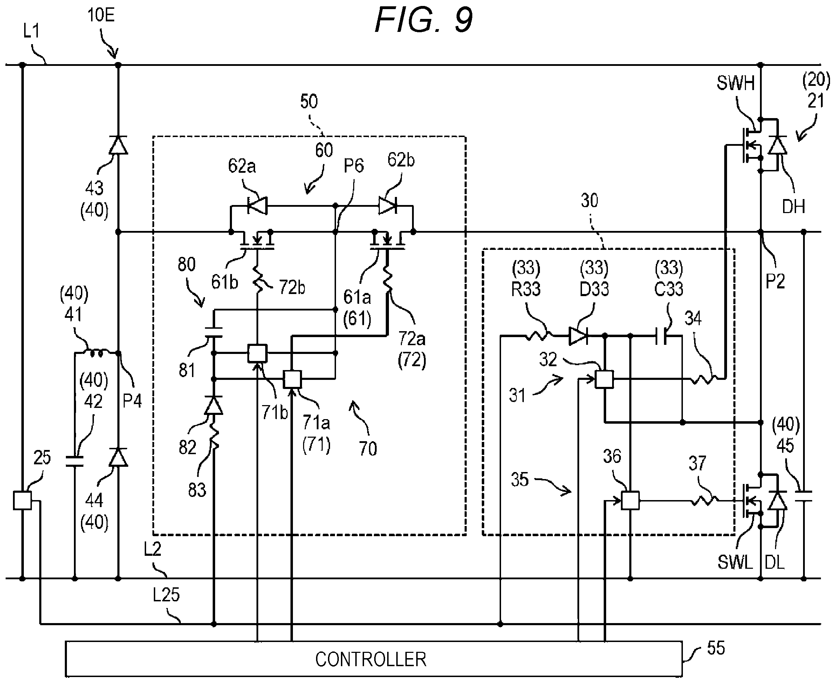

Fig. 9 is a circuit diagram illustrating a configuration of power conversion device 10E according to a second exemplary embodiment. Power conversion device 10E of the second exemplary embodiment is different in configurations of auxiliary switching unit 60 and auxiliary power supply unit 80 in each of "n" pieces of auxiliary circuits 50 from power conversion device 10 of the first exemplary embodiment. Power conversion device 10E according to the second exemplary embodiment is similar in other configurations to power conversion device 10 according to the first exemplary embodiment.

### [Auxiliary switching unit]

Each of the "n" pieces of auxiliary circuits 50 in the second exemplary embodiment includes auxiliary switching unit 60 including first auxiliary switching element 61a, second auxiliary switching element 61b, first auxiliary diode 62a, and second auxiliary diode 62b.

First auxiliary switching element 61a and second auxiliary switching element 61b are connected in series between main connection point P2 and resonant inductor 41. Second auxiliary switching element 61b is connected between first auxiliary switching element 61a and resonant inductor 41.

First auxiliary diode 62a is connected between auxiliary connection point P6, which is a connection point between first auxiliary switching element 61a and second auxiliary switching element 61b, and resonant inductor 41. First auxiliary diode 62a has a direction from auxiliary connection point P6 toward resonant inductor 41, the direction being defined as a forward direction. Second auxiliary diode 62b is connected between main connection point P2 and auxiliary connection point P6. Second auxiliary diode 62b has a direction from auxiliary connection point P6 toward main connection point P2, the direction being defined as a forward direction.

Specifically, first auxiliary switching element 61a is connected at one end (collector or drain) to main connection point P2. Second auxiliary switching element 61b is connected at one end (collector or drain) to resonant connection point P4. First auxiliary switching element 61a is connected at the other end (emitter or source) to the other end (emitter or source) of second auxiliary switching element 61b. First auxiliary diode 62a includes an anode connected to auxiliary connection point P6. First auxiliary diode 62a includes a cathode connected to resonant connection point P4. Second auxiliary diode 62b includes an anode connected to auxiliary connection point P6. Second auxiliary diode 62b includes a cathode connected to main connection point P2.

### [Auxiliary power supply unit]

Each of the "n" pieces of auxiliary circuits 50 in the second exemplary embodiment includes auxiliary power supply unit 80 including one auxiliary power supply capacitor 81. Auxiliary power supply capacitor 81 is provided to generate operating voltage of first auxiliary driver 71a and operating voltage of second auxiliary driver 71b. Auxiliary power supply unit 80 is configured to allow a current to flow from drive power supply unit 25 toward main connection point P2 through auxiliary power supply capacitor 81 when low-side switching element SWL is turned on while first auxiliary switching element 61a and second auxiliary switching element 61b are turned off and high-side switching element SWH is turned off.

Auxiliary power supply capacitor 81 in the second exemplary embodiment is connected between drive power supply unit 25 and auxiliary connection point P6. Auxiliary power supply capacitor 81 is connected at one end to a positive terminal of first auxiliary driver 71a and a positive terminal of second auxiliary driver 71b, to which voltage generated in auxiliary power supply capacitor 81 is applied. Auxiliary connection point P6 is connected to a negative terminal of first auxiliary driver 71a and a negative terminal of second auxiliary driver 71b, to which voltage at auxiliary connection point P6 is applied.

### [Charging operation of auxiliary power supply capacitor]

Charging operation of auxiliary power supply capacitor 81 in auxiliary circuit 50 of the second exemplary embodiment will be described. When low-side switching element SWL is turned on while not only auxiliary switching element 61 (first auxiliary switching element 61a and second auxiliary switching element 61b) but also high-side switching element SWH is turned off, a current flows from drive power supply unit 25 into auxiliary power supply unit 80 through drive line L25.

The current having flowed into auxiliary power supply unit 80 passes through auxiliary power supply resistive element 83, auxiliary power supply diode 82, and auxiliary power supply capacitor 81 in order in auxiliary power supply unit 80, and passes through auxiliary connection point P6 and second auxiliary diode 62b in order in auxiliary switching unit 60. Then, the current having flowed into auxiliary power supply unit 80 passes through main connection point P2 and low-side switching element SWL in an on state in order, and flows into negative electrode line L2. In this way, a charging path of auxiliary power supply capacitor 81 is formed to charge auxiliary power supply capacitor 81.

### [Effects of second exemplary embodiment]

Motor unit 1 of the second exemplary embodiment can obtain an effect similar to that of motor unit 1 of the first exemplary embodiment.

Motor unit 1 of the second exemplary embodiment can include no third auxiliary diode 62c and no fourth auxiliary diode 62d illustrated in Fig. 2. Consequently, auxiliary circuit 50 can be downsized.

Motor unit 1 of the second exemplary embodiment can include no second auxiliary power supply diode 82b and no second auxiliary power supply resistive element 83b illustrated in Fig. 2. Consequently, auxiliary circuit 50 can be downsized.

### (Third exemplary embodiment)

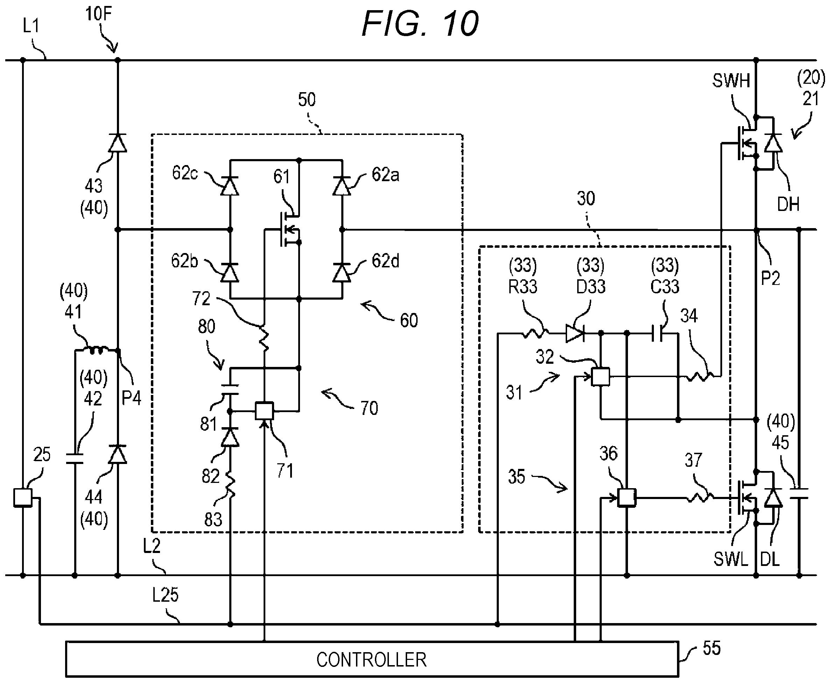

Fig. 10 is a circuit diagram illustrating a configuration of power conversion device 10F according to a third exemplary embodiment. Power conversion device 10F according to the third exemplary embodiment is different in configuration and processing of "n" pieces of auxiliary circuits 50 from power conversion device 10 according to the first exemplary embodiment. Power conversion device 10F according to the third exemplary embodiment is similar in other configurations and other processing to power conversion device 10 according to the first exemplary embodiment.

### [Auxiliary switching unit]

Each of the "n" pieces of auxiliary circuits 50 in the third exemplary embodiment includes auxiliary switching unit 60 including one auxiliary switching element 61, first auxiliary diode 62a, second auxiliary diode 62b, third auxiliary diode 62c, and fourth auxiliary diode 62d. First auxiliary diode 62a, second auxiliary diode 62b, third auxiliary diode 62c, and fourth auxiliary diode 62d constitute a diode bridge circuit.

First auxiliary diode 62a is connected between main connection point P2 and one end (emitter or source) of auxiliary switching element 61. First auxiliary diode 62a has a direction from main connection point P2 toward auxiliary switching element 61, the direction being defined as a forward direction. Second auxiliary diode 62b is connected between the other end (collector or drain) of auxiliary switching element 61 and resonant inductor 41. Second auxiliary diode 62b has a direction from auxiliary switching element 61 toward resonant inductor 41, the direction being defined as a forward direction.

Third auxiliary diode 62c is connected between resonant inductor 41 and one end of auxiliary switching element 61. Third auxiliary diode 62c has a direction from resonant inductor 41 toward auxiliary switching element 61, the direction being defined as a forward direction. Fourth auxiliary diode 62d is connected between the other end of auxiliary switching element 61 and main connection point P2. Fourth auxiliary diode 62d has a direction from auxiliary switching element 61 toward main connection point, the direction being defined as a forward direction.

Specifically, auxiliary switching element 61 is connected at the one end to a cathode of first auxiliary diode 62a and a cathode of third auxiliary diode 62c. Auxiliary switching element 61 is connected at the other end to an anode of second auxiliary diode 62b and an anode of fourth auxiliary diode 62d. Main connection point P2 is connected to an anode of first auxiliary diode 62a and a cathode of fourth auxiliary diode 62d. Resonant connection point P4 is connected to an anode of third auxiliary diode 62c and a cathode of second auxiliary diode 62b.

### [Auxiliary drive unit]

Each of the "n" pieces of auxiliary circuits 50 in the second exemplary embodiment includes auxiliary drive unit 70 including one auxiliary driver 71 and one auxiliary output resistive element 72. Auxiliary driver 71 controls on and off of auxiliary switching element 61 in response to control of controller 55. For example, operation of power conversion device 10 illustrated in Figs. 3 and 4 is controlled in which auxiliary switching element 61 is turned on in a period in which first auxiliary switching element 61a or second auxiliary switching element 61b is turned on, and is turned off in a period in which first auxiliary switching element 61a and second auxiliary switching element 61b are turned off.

### [Auxiliary power supply unit]

Each of the "n" pieces of auxiliary circuits 50 in the third exemplary embodiment includes one auxiliary power supply capacitor 81. Auxiliary power supply capacitor 81 is provided to generate operating voltage of one auxiliary driver 71. Auxiliary power supply unit 80 is configured to allow a current to flow from drive power supply unit 25 toward main connection point P2 through auxiliary power supply capacitor 81 when low-side switching element SWL is turned on while first auxiliary switching element 61a and second auxiliary switching element 61b are turned off and high-side switching element SWH is turned off.

Auxiliary power supply capacitor 81 in the third exemplary embodiment is connected between drive power supply unit 25 and a connection point between the other end of auxiliary switching element 61 and fourth auxiliary diode 62d. Auxiliary driver 71 includes a positive terminal connected to one end of auxiliary power supply capacitor 81. Auxiliary power supply capacitor 81 generates voltage that is applied to the positive terminal of auxiliary driver 71. Auxiliary driver 71 includes a negative terminal connected to a connection point between the other end of auxiliary switching element 61 and fourth auxiliary diode 62d. Voltage at the connection point between the other end of auxiliary switching element 61 and fourth auxiliary diode 62d is applied to the negative terminal of auxiliary driver 71.

### [Charging operation of auxiliary power supply capacitor]

Charging operation of auxiliary power supply capacitor 81 in auxiliary circuit 50 of the third exemplary embodiment will be described. When low-side switching element SWL is turned on while not only auxiliary switching element 61 (first auxiliary switching element 61a and second auxiliary switching element 61b) but also high-side switching element SWH is turned off, a current flows from drive power supply unit 25 into auxiliary power supply unit 80 through drive line L25.

The current having flowed into auxiliary power supply unit 80 passes through auxiliary power supply resistive element 83, auxiliary power supply diode 82, and auxiliary power supply capacitor 81 in order in auxiliary power supply unit 80, and passes through fourth auxiliary diode 62d in auxiliary switching unit 60. Then, the current having flowed into auxiliary power supply unit 80 passes through main connection point P2 and low-side switching element SWL in an on state in order, and flows into negative electrode line L2. In this way, a charging path of auxiliary power supply capacitor 81 is formed to charge auxiliary power supply capacitor 81.

### [Effects of third exemplary embodiment]

Motor unit 1 of the third exemplary embodiment can obtain an effect similar to that of motor unit 1 of the first exemplary embodiment.

Motor unit 1 of the third exemplary embodiment can include no second auxiliary switching element 61b illustrated in Fig. 2. Consequently, auxiliary circuit 50 can be downsized.

### (Other exemplary embodiments)

Examples of the input voltage include "power supplied from power supply 11 that is a DC power supply" in the above description. However, the input voltage is not limited to this. For example, the input voltage may be DC voltage obtained by rectifying AC voltage supplied from power supply 11, which is an AC power supply, using a converter.

Controller unit 55 in the above description may be composed of a single processor or a plurality of processors.

The exemplary embodiments described above may be appropriately combined to be implemented. The exemplary embodiments described above are each an intrinsically preferable example, and are not intended to limit the technique disclosed herein, an application of the technique, or a range of use of the technique.

### INDUSTRIAL APPLICABILITY

As described above, the technique disclosed herein is useful as an auxiliary circuit, a power conversion device, a motor unit, and the like.

### REFERENCE MARKS IN THE DRAWINGS

1: motor unit
10, 10A, 10B, 10C, 10D, 10E, 10F: power conversion device
11: power supply
12: motor
20: converter
21: leg
SWH: high-side switching element
SWL: low-side switching element
DH: high-side freewheeling diode
DL: low-side freewheeling diode
P2: main connection point
25: drive power supply unit
26: control power supply unit
27: drive diode
30: drive unit
31: high-side drive unit
32: high-side driver
33: high-side power supply unit
C33: high-side power supply capacitor
D33: high-side power supply diode
R33: high-side power supply resistive element
34: high-side output resistive element
35: low-side drive unit
36: low-side driver
37: low-side output resistive element
40: resonator
41: resonant inductor
42: resonant power supply capacitor
43: first resonant diode
44: second resonant diode
45: resonant capacitor
50: auxiliary circuit
55: controller
60: auxiliary switching unit
61: auxiliary switching element
61a: first auxiliary switching element
61b: second auxiliary switching element
62a: first auxiliary diode
62b: second auxiliary diode
62c: third auxiliary diode
62d: fourth auxiliary diode
P6: auxiliary connection point
70: auxiliary drive unit
71: auxiliary driver
71a: first auxiliary driver
71b: second auxiliary driver
72: auxiliary output resistive element
72a: first auxiliary output resistive element
72b: second auxiliary output resistive element
80: auxiliary power supply unit
81: auxiliary power supply capacitor
81a: first auxiliary power supply capacitor
81b: second auxiliary power supply capacitor
82: auxiliary power supply diode
82a: first auxiliary power supply diode
82b: second auxiliary power supply diode
82c: third auxiliary power supply diode
83: auxiliary power supply resistive element
83a: first auxiliary power supply resistive element
83b: second auxiliary power supply resistive element
91: resonant voltage sensor
92: power supply voltage sensor
L1: positive electrode line
L2: negative electrode line
L3: output line
C1: smoothing capacitor

## Claims

1. An auxiliary circuit used in a power conversion device including a converter, a drive power supply unit, and a resonator to convert input voltage applied between a positive electrode line and a negative electrode line into output voltage, the auxiliary circuit comprising:
an auxiliary switching unit;
an auxiliary drive unit; and
an auxiliary power supply unit
the converter including a leg including a high-side switching element and a low-side switching element connected in series between the positive electrode line and the negative electrode line to convert the input voltage into the output voltage by switching on and off of the high-side switching element and the low-side switching element,
the drive power supply unit being configured to generate a drive voltage to be used for controlling on and off of the high-side switching element and the low-side switching element based on the input voltage,
the resonator including a resonant inductor and a resonant capacitor connected to a main connection point that is a connection point between the high-side switching element and the low-side switching element,
the auxiliary switching unit including an auxiliary switching element disposed between the main connection point and the resonant inductor to allow a current to flow between the main connection point and the resonant inductor when the auxiliary switching element is turned on,
the auxiliary drive unit including an auxiliary driver that controls on and off of the auxiliary switching element, and
the auxiliary power supply unit including an auxiliary power supply capacitor for generating an operating voltage of the auxiliary driver to allow a current to flow from the drive power supply unit toward the main connection point through the auxiliary power supply capacitor when the low-side switching element is turned on while the auxiliary switching element is turned off and the high-side switching element is turned off.

2. The auxiliary circuit according to Claim 1, wherein
the auxiliary switching unit includes a first auxiliary switching element and a second auxiliary switching element disposed between the main connection point and the resonant inductor to allow not only a current to flow from the main connection point toward the resonant inductor when the first auxiliary switching element is turned on and the second auxiliary switching element is turned off, but also a current to flow from the resonant inductor toward the main connection point when the first auxiliary switching element is turned off and the second auxiliary switching element is turned on,
the auxiliary drive unit includes:
a first auxiliary driver that controls on and off of the first auxiliary switching element;
a second auxiliary driver that controls on and off of the second auxiliary switching element,
the auxiliary power supply unit includes:
a first auxiliary power supply capacitor for generating operating voltage of the first auxiliary driver;
a second auxiliary power supply capacitor for generating operating voltage of the second auxiliary driver,
the auxiliary switching element is the first auxiliary switching element,
the auxiliary driver is the first auxiliary driver, and
the auxiliary power supply capacitor is the first auxiliary power supply capacitor.

3. The auxiliary circuit according to Claim 2, wherein the auxiliary power supply unit is configured to allow a current to flow from the drive power supply unit toward the main connection point through the first auxiliary power supply capacitor and the second auxiliary power supply capacitor when the low-side switching element is turned on while the first auxiliary switching element and the second auxiliary switching element are turned off and the high-side switching element is turned off.

4. The auxiliary circuit according to Claim 3, wherein
the first auxiliary switching element and the second auxiliary switching element are connected in parallel between the main connection point and the resonant inductor,
the auxiliary switching unit includes:
a first auxiliary diode connected between the first auxiliary switching element and the resonant inductor, the first auxiliary diode having a direction from the first auxiliary switching element toward the resonant inductor, the direction being defined as a forward direction;
a second auxiliary diode connected in parallel to the first auxiliary switching element between the main connection point and the first auxiliary diode, the second auxiliary diode having a direction from the first auxiliary diode toward the main connection point, the direction being defined as a forward direction;
a third auxiliary diode connected between the second auxiliary switching element and the resonant inductor, the third auxiliary diode having a direction from the resonant inductor toward the second auxiliary switching element, the direction being defined as a forward direction; and
a fourth auxiliary diode connected in parallel to the second auxiliary switching element between the main connection point and the third auxiliary diode, the fourth auxiliary diode having a direction from the main connection point toward the third auxiliary diode, the direction being defined as a forward direction,
the first auxiliary power supply capacitor is connected between a connection point between the first auxiliary switching element and the first auxiliary diode, and the drive power supply unit, and
the second auxiliary power supply capacitor is connected between the main connection point and the drive power supply unit.

5. The auxiliary circuit according to Claim 4, wherein
the auxiliary power supply unit includes:
a first auxiliary power supply diode connected between the drive power supply unit and the first auxiliary power supply capacitor, the first auxiliary power supply diode having a direction from the drive power supply unit to the first auxiliary power supply capacitor, the direction being defined as a forward direction;
a first auxiliary power supply resistive element connected in series to the first auxiliary power supply diode between the drive power supply unit and the first auxiliary power supply capacitor;
a second auxiliary power supply diode connected between the drive power supply unit and the second auxiliary power supply capacitor, the second auxiliary power supply diode having a direction from the drive power supply unit toward the second auxiliary power supply capacitor, the direction being defined as a forward direction; and
a second auxiliary power supply resistive element connected in series to the second auxiliary power supply diode between the drive power supply unit and the second auxiliary power supply capacitor.

6. The auxiliary circuit according to Claim 5, wherein
the auxiliary power supply unit includes a third auxiliary power supply diode having a direction from one end connected to the drive power supply unit toward another end, the direction being defined as a forward direction,
the first auxiliary power supply diode and the first auxiliary power supply resistive element are connected between the one end of the third auxiliary power supply diode and the first auxiliary power supply capacitor, and
the second auxiliary power supply diode and the second auxiliary power supply resistive element are connected between an other end of the third auxiliary power supply diode and the second auxiliary power supply capacitor.

7. The auxiliary circuit according to Claim 2, wherein
on and off of the high-side switching element is controlled by a high-side drive unit,
the high-side drive unit includes:
a high-side driver that controls on and off of the high-side switching element; and
a high-side power supply unit including a high-side power supply capacitor for generating operating voltage of the high-side driver, the high-side power supply unit being configured to allow a current to flow from the drive power supply unit to the main connection point through the high-side power supply capacitor when the low-side switching element is turned on while the high-side switching element is turned off, and
the auxiliary power supply unit is configured to allow a part of a current to flow to the main connection point through the second auxiliary power supply capacitor, the current flowing from the drive power supply unit toward the high-side power supply capacitor in the high-side power supply unit.

8. The auxiliary circuit according to Claim 1, wherein
the auxiliary switching unit includes a first auxiliary switching element and a second auxiliary switching element disposed between the main connection point and the resonant inductor to allow not only a current to flow from the main connection point toward the resonant inductor when the first auxiliary switching element is turned on and the second auxiliary switching element is turned off, but also a current to flow from the resonant inductor toward the main connection point when the first auxiliary switching element is turned off and the second auxiliary switching element is turned on,
the auxiliary drive unit includes:
a first auxiliary driver that controls on and off of the first auxiliary switching element; and
a second auxiliary driver that controls on and off of the second auxiliary switching element,
the auxiliary power supply capacitor is provided to generate operating voltage of the first auxiliary driver and operating voltage of the second auxiliary driver,
the auxiliary switching element is the first auxiliary switching element, and
the auxiliary driver is the first auxiliary driver.

9. The auxiliary circuit according to Claim 8, wherein
the first auxiliary switching element and the second auxiliary switching element are connected in series between the main connection point and the resonant inductor,
the second auxiliary switching element is connected between the first auxiliary switching element and the resonant inductor,
the auxiliary switching unit includes:
a first auxiliary diode connected between an auxiliary connection point, which is a connection point between the first auxiliary switching element and the second auxiliary switching element, and the resonant inductor, the first auxiliary diode having a direction from the auxiliary connection point toward the resonant inductor, the direction being defined as a forward direction; and
a second auxiliary diode connected between the main connection point and the auxiliary connection point, the second auxiliary diode having a direction from the auxiliary connection point toward the main connection point, the direction being defined as a forward direction, and
the auxiliary power supply capacitor is connected between the drive power supply unit and the auxiliary connection point.

10. The auxiliary circuit according to Claim 1, wherein
the auxiliary switching unit includes:
a first auxiliary diode connected between the main connection point and one end of the auxiliary switching element, the first auxiliary diode having a direction from the main connection point toward the auxiliary switching element, the direction being defined as a forward direction;
a second auxiliary diode connected between another end of the auxiliary switching element and the resonant inductor, the second auxiliary diode having a direction from the auxiliary switching element to the resonant inductor, the direction being defined as a forward direction;
a third auxiliary diode connected between the resonant inductor and the one end of the auxiliary switching element, the third auxiliary diode having a direction from the resonant inductor toward the auxiliary switching element, the direction being defined as a forward direction; and
a fourth auxiliary diode connected between the other end of the auxiliary switching element and the main connection point, the fourth auxiliary diode having a direction from the auxiliary switching element toward the main connection point, the direction being defined as a forward direction, and
the auxiliary power supply capacitor is connected between the drive power supply unit and a connection point between the other end of the auxiliary switching element and the fourth auxiliary diode.

11. A power conversion device comprising:
"n" pieces of auxiliary circuits each of which is the auxiliary circuit according to any one of Claims 1 to 10;
the converter;
the drive power supply unit; and
the resonator,
wherein "n" is an integer of one or more,
the converter includes "n" pieces of legs each of which is the leg,
the resonator includes the resonant inductor and "n" pieces of resonant capacitors each of which is the resonant capacitor corresponding to one of the "n" pieces of legs, and
the "n" pieces of auxiliary circuits correspond to the respective "n" pieces of legs.

12. A motor unit comprising:
a motor; and
the power conversion device according to Claim 11 that drives the motor.
